Europäisches Patentamt

European Patent Office

Office européen des brevets

(19)

(11) **EP 1 112 623 B1**

(12) **EUROPÄISCHE PATENTSCHRIFT**

(45) Veröffentlichungstag und Bekanntmachung des Hinweises auf die Patenterteilung:
**13.10.2004 Patentblatt 2004/42**

(21) Anmeldenummer: **99947199.8**

(22) Anmeldetag: **13.07.1999**

(51) Int Cl.7: **H04B 1/707**

(86) Internationale Anmeldenummer:
**PCT/DE1999/002156**

(87) Internationale Veröffentlichungsnummer:
**WO 2000/016495 (23.03.2000 Gazette 2000/12)**

(54) **VERFAHREN UND VORRICHTUNG ZUR DETEKTION VON CDMA-KODIERTEN SIGNALEN**

METHOD AND DEVICE FOR DETECTING CDMA-CODED SIGNALS

PROCEDE ET DISPOSITIF DE DETECTION DE SIGNAUX A CODAGE AMRC

(84) Benannte Vertragsstaaten:
**AT BE CH CY DE DK ES FI FR GB GR IE IT LI LU MC NL PT SE**

(30) Priorität: **11.09.1998 DE 19841578**

(43) Veröffentlichungstag der Anmeldung:
**04.07.2001 Patentblatt 2001/27**

(73) Patentinhaber: **ROBERT BOSCH GMBH**
**70442 Stuttgart (DE)**

(72) Erfinder: **KOWALEWSKI, Frank**
**D-38228 Salzgitter (DE)**

(56) Entgegenhaltungen:
**US-A- 5 757 791**

• **WERNER M: "MEHRSTUFIGES JOINT-DETECTION-VERFAHREN MIT ENTSCHEIDUNGSRUECKKOPPLUNG FUER CDMA MODILFUNKANWENDUNGEN" ITG FACHBERICHTE,DE,BERLIN, VDE VERLAG, Bd. NR. 130, Seite 357-368 XP000503811 ISBN: 3-8007-2036-1**
• **WANG HAIFENG ET AL: "Joint multiuser detector with decoding and feedback in asynchronous CDMA systems" 1988 IEEE 5TH INTERNATIONAL SYMPOSIUM ON SPREAD SPECTRUM TECHNIQUES AND APPLICATIONS - PROCEEDINGS. SPREAD TECHNOLOGY TO AFRICA (CAT. NO.98TH8333), PROCEEDINGS OF ISSSTA'98 INTERNATIONAL SYMPOSIUM ON SPREAD SPECTRUM TECHNIQUES AND APPLICATIONS, SUN C, Seiten 160-163 vol.1, XP002127539 1998, New York, NY, USA, IEEE, USA ISBN: 0-7803-4281-X**

EP 1 112 623 B1

**Beschreibung**

Die Erfindung betrifft ein Verfahren und eine Vorrichtung zur Detektion von CDMA-kodierten Signalen.

CDMA bietet die Möglichkeit mehrere zeitdiskrete Datenströme zu einem Gesamtsignal so zusammenzufassen, daß die ursprünglichen Datenströme aus diesem Signal wiedergewonnen werden können. Die Datenströme lassen sich auch dann wiedergewinnen, wenn die CDMA-kodierten Signale durch verschiedene lineare Filter verändert werden. Die einfachste Möglichkeit der Datendetektion bietet ein sog. Matched Filter. Bessere Ergebnisse liefert der RAKE-Empfänger, der beispielsweise in A.Salmasi, K.S. Gilhousen: "On the system design aspects of code division multiple access (CDMA) applied to digital cellular and personal communications network", Proc. IEEE Conf. Veh. Technol., St. Louis, MO, USA, Mai 1991, Seiten 57-62, beschrieben ist. Diese Detektoren erfordern nur die Kenntnis des Codes des zu detektierenden Datenstroms. Sind auch die Codes der nicht zu detektierenden Datenströme bekannt, so lassen sich die durch die fremden Datenströme verursachten Interferenzen (durch nicht orthogonale Codes) bestimmen und eliminieren. Durch entsprechende Multiuser-Verfahren kann die CDMA-Detektion wesentlich verbessert werden. Neben dem optimalen Maximum-Likelihood-Detektor, der beispielsweise in W. van Atten: "Maximumlikelihood receiver for multiple channel transmission systems", IEEE Trans. Commun., Bd. 24 (1976) 276-283, beschrieben ist, sind mehrere suboptimale Verfahren bekannt, so beispielsweise W. Sauer-Greff und R.A. Kennedy:

"Suboptimal MLSE for distorted multiple-access channels using the M-algorithm", Proc. Aachener Kolloquium Signal Theorie, Aachen, März 1994, 267-270; K.S. Schneider: "Detection of code division multiplexed signals", IEEE Trans. Aerosp. Electron. Syst., Bd. AES-15 (1979), 181-185; R. Lupas und S. Verdu: "Linear multiuser detectors for synchronous code division multiple-access channels", IEEE Trans. Inform. Theory, Bd 35 (1989), 123-136; Z. Xie, R.T. Short und C.K. Rushforth:
"A family of suboptimum detectors for coherent multiuser communications", IEEE J. Select. Areas Commun., Bd. 8 (1990), 683-690; und A. Duel-Hallen:
"Decorrelating decision-feedback multiuser detector for synchronous code-division multiple-access channels", IEEE Trans. Commun., Bd. 41(1993), 285-290.

Ein weiteres Detektionsverfahren wird in M. Wemer: " Mehrstufiges Joint-Detektion-Verfahren mit Entscheidungsrückkopplung für CDMA Mobilfunkanwendungen", VDE, Berlin, 1994 beschrieben.

Sind die Impulsantworten der Übertragungskanäle der kodierten Datenströme bekannt, so lassen sich auch die durch die Filterungen verursachten Interferenzen eliminieren, wie dies aus J. Salz: "Digital transmission over cross-coupled linear channels", Bell Syst. Tech. J.$_1$ Bd. 64(1985), 1147-1159; A. Duel-Hallen:

"Equalizers for multiple input/multiple output channels and PAM systems with cyclostationary input sequences", IEEE J. Select. Areas Commun., Bd. 10 (1992), 630-639;
und M.L. Honig, P. Crespo und K. Steiglitz:
"Suppression of near- and far-end crosstalk by linear pre- and post-filtering", IEEE J. Select. Areas Commun., Bd. 10 (1992), Seiten 614-629 bekannt ist.

Größter Nachteil von Multiuser-Detektoren ist ihr erheblicher rechnerischer Aufwand. Selbst suboptimale Verfahren sind häufig aufgrund des rechnerischen Aufwandes nicht durchführbar. Andererseits bietet der rechnerisch einfache RAKE-Empfänger deutlich schlechtere Detektionsergebnisse.

Der Erfindung liegt daher die Aufgabe zugrunde, ein Multiuser-Detektionsverfahren und eine entsprechende Vorrichtung zu schaffen, die sich an der zur Verfügung stehenden Rechenleistung orientieren.

Diese Aufgabe wird durch das Verfahren mit den Merkmalen des Anspruchs 1 und die Vorrichtung mit den Merkmalen des Anspruchs 7 gelöst. Bevorzugte Ausgestaltungen der Erfindung sind Gegenstand der Unteransprüche.

Das erfindungsgemäße Verfahren zur Detektion von CDMA-codierten Signalen $\underline{d} = (\underline{d}^{(1)},...,\underline{d}^{(K)})$, mit

$$\underline{d}^{(k)} = (d_1^{(k)},...,d_M^{(k)}), \quad k = 1,...,K,$$

weist die folgenden Schritte auf:

a) Bestimmen einer ersten Detektionslösung $\hat{\underline{d}}(1)$ der CDMA-codierten Signale $\underline{d}$;
b) Berechnen einer $(n+1)$-ten Detektionslösung $\hat{\underline{d}}(n+1)$ durch die Zuweisung $\hat{\underline{d}}(n+1) = f(\hat{\underline{d}}(n))$ als Funktion der n-ten Detektionslösung $\underline{d}(n)$ für $n = 1, ...,N$, wobei gilt daß die Iteration für große n gegen die Multiuser-Lösung $\underline{d}_{MU}$ konvergiert, d.h.

$$f(\hat{\underline{d}}(n)) \xrightarrow[n \to \infty]{} \hat{\underline{d}}_{MU},$$

c) Ist die Güte der Näherungslösung $\hat{\underline{d}}(n+1)$ nicht ausreichend, setze n → n+1 und Fortsetzen des Verfahrens mit Schritt b),

d) Ist die Güte der Lösung $\hat{\underline{d}}(n+1)$ ausreichend, Beenden des Verfahrens und Verwenden von $\hat{\underline{d}}(n+1)$ als Schätzwert der zu detektierenden Daten $\underline{d}$.

Dabei können die zu sendenden Symbole $\underline{d}^{(k)}$ kontinuierliche oder diskrete Daten repräsentieren, wobei bei einer QPSK-Modulation (Quaternary Phase Shift Keying) die Symbole vorzugsweise die Werte $\underline{d}^{(k)} = \pm 1, \pm i$ annehmen.

Vorzugsweise konvergiert das Verfahren für n → ∞ gegen die Lösung des Zero Forcing Block Linear Estimator.

Ferner kann die Funktion des Schrittes b) gebildet werden durch

$$f(\hat{\underline{d}}) = \hat{\underline{d}} + \delta \cdot \underline{g}$$

mit einem Normalisierungsfaktor

$$\delta = \frac{\|g\|^2}{\|A \cdot g\|^2}$$

und einem Approximationsterm

$$\underline{g}^T = A^H \cdot (\underline{s}^T - A \cdot \hat{\underline{d}}^T),$$

wobei die Matrix $A$ gegeben ist durch

$$A = \begin{bmatrix} b^{(1)}{}_1 & 0 & \cdots & \\ \vdots & \vdots & & \\ b^{(1))}{}_Q & 0 & & \vdots \\ \vdots & b^{(1)}{}_1 & & \\ b^{(1)}{}_{Q+W-1} & \vdots & & 0 \\ 0 & b^{(1)}{}_{Q+W-1} & & b^{(K)}{}_1 \\ \vdots & \vdots & & \vdots \\ 0 & 0 & \cdots & b^{(k)}{}_{Q+W-1} \end{bmatrix}$$

mit $\underline{b}^{(k)} = \underline{c}^{(k)} * \underline{h}^{(k)}$,

wobei $\underline{c}^{(k)}$ die K verschiedenen Codes und $\underline{h}^{(k)}$ die Impulsantworten der K verschiedenen linearen Übertragungskanäle sind.

Als 1-te Detektionslösung zum Starten der Iteration wird vorzugsweise die Lösung $\hat{\underline{d}}^T(1) = A^H \cdot \underline{s}^T$ des RAKE-Empfängers verwendet. Ferner kann die erste Detektionslösung zum Starten der Iteration auf Null gesetzt werden.

Eine erfindungsgemäße Vorrichtung zur Durchführung des oben geschilderten Verfahrens umfaßt einen Datenschätzer zur Bestimmung einer ersten Detektionslösung, einen Schätzungsverbesserer zur Bestimmung einer verbesserten Detektionslösung und einen Entscheider zur Entscheidung über die Fortsetzung der Iteration.

Vorzugsweise umfaßt der Schätzungsverbesserer eine Einheit zur Berechnung eines geschätzten Sendesignals, eine Einheit zur Berechnung des normalisierten Approximationsterms $\delta \cdot \underline{g}$ und einen Addierer zur Berechnung der verbesserten Schätzung. Dabei kann die Einheit zur Berechnung des normalisierten Approximationsterms $\delta \cdot \underline{g}$ eine Einheit zur Berechnung des Approximationsterms $\underline{g}$, eine Einheit zur Berechnung des Normalisierungsfaktors $\delta$ und

einen Multiplizierer zur Berechnung des normalisierten Approximationsterms aufweisen.

Ein besonderer Vorteil des erfindungsgemäßen Verfahrens ist darin zu sehen, daß das Verfahren nur so viel Rechenleistung erfordert, wie ihm zur Verfügung gestellt wird. Die gelieferte Lösung ist besser als die Lösung eines RAKE-Empfängers. Falls die zur Verfügung gestellte Rechenleistung ausreicht, so nähert sich die Lösung des erfindungsgemäßen Verfahrens an die Lösung des Multiuser-Verfahrens, d.h. die Lösung des Multiuser-Verfahrens wird durch das erfindungsgemäße Verfahren approximiert. Durch Vorgabe des Zeitaufwandes des Verfahrens läßt es sich leicht an verschieden komplexe Detektionsaufgaben anpassen, z.B. im Falle zeitlich variabler Übertragungskanäle des CDMA-Systems.

Eine bevorzugte Ausführungsform der Erfindung wird nachfolgend anhand der Zeichnungen erläutert.

Fig. 1 zeigt ein Ablaufdiagramm des erfindungsgemäßen Verfahrens,

Fig. 2 zeigt ein Strukturdiagramm des Detektors, und

Fig. 3 zeigt ein Diagramm des Schätzungsverbesserers des Ausführungsbeispiels der Fig. 2.

Vor der detaillierten Erläuterung der Figuren wird jedoch erst ein kurzer Abriß der Theorie des Verfahrens gegeben.

Es seien K verschiedene zeitdiskrete digitale Datenströme

$$\underline{d}^{(k)} = (d^{(k)}_1, d^{(k)}_2, ..., d^{(k)}_M)$$

Die zu sendenden Symbole $\underline{d}^{(k)}$ können kontinuierliche oder diskrete Daten repräsentieren. Digitale Daten werden vorzugsweise durch lineare Modulation auf diskrete komplexe Werte der Symbole $\underline{d}^{(k)}$ abgebildet, wobei bei einer QPSK-Modulation (Quaternary Phase Shift Keying) die Symbole beispielsweise die Werte $\underline{d}^{(k)} = \pm 1$ oder $\pm i$ annehmen.

Diese seien entsprechend mit K verschiedenen Codes

$$\underline{c}(k) = (c^{(k)}_1, ..., c^{(k)}_Q)$$

CDMA-codiert zu:

$$\underline{a}^{(k)} =$$

$$(d^{(k)}_1 \cdot c^{(k)}_1, ..., d^{(k)}_1 \cdot c^{(k)}_Q, ..., d^{(k)}_M \cdot c^{(k)}_1, ...,$$

$$d^{(k)}_M \cdot c^{(k)}_Q)$$

Diese K Signale seien durch K verschiedene lineare Übertragungskanälen mit den Impulsantworten

$$\underline{h}^{(k)} = (h^{(k)}_1, ... h^{(k)}_W)$$

gefiltert zu:

$$\underline{s}^{(k)} = \underline{a}^{(k)} * \underline{h}^{(k)}$$

Die übertragenen Signale $\underline{s}^{(k)}$ und ein zusätzliches Rauschen $\underline{n}$ werden zu einem Gesamtsignal aufsummiert:

$$\underline{s} = \sum_{k=1}^{K} \underline{s}^{(k)} + \underline{n}.$$

Mit

$$\underline{d} = (\underline{d}^{(1)},...,\underline{d}^{(K)}),$$

$$A = \begin{bmatrix} b^{(1)}{}_1 & 0 & \cdots \\ \vdots & \vdots & \\ b^{(1))}{}_\varrho & 0 & \vdots \\ \vdots & b^{(1)}{}_1 & \\ b^{(1)}{}_{\varrho+W-1} & \vdots & 0 \\ 0 & b^{(1)}{}_{\varrho+W-1} & b^{(K)}{}_1 \\ \vdots & \vdots & \vdots \\ 0 & 0 & \cdots & b^{(k)}{}_{\varrho+W-1} \end{bmatrix}$$

und

$$\underline{b}^{(k)} = \underline{c}^{(k)} * \underline{h}^{(k)}$$

läßt sich $\underline{s}$ durch ein lineares Gleichungssystem ausdrücken:

$$\underline{s}^T = A \cdot \underline{d}^T + \underline{n}^T,$$

wobei $\underline{s}^T$ die Transponierte des Vektor $\underline{s}$ ist.

Aus diesem Empfängersignal lassen sich die gesendeten Datenströme durch einen RAKE-Empfänger schätzen:

$$\hat{\underline{d}}^T = A^H \cdot \underline{s}^T$$

Dabei ist $A^H$ die zu $A$ transponierte und komplex konjugierte Matrix und $\hat{\underline{d}}$ ist die Schätzung der gesendeten Datenbits.

Bessere Ergebnisse erhält man mit einem sog. Multiuser-Verfahren, wie beispielsweise dem Zero Forcing Block Linear Estimator:

$$\hat{\underline{d}}^T = (A^H \cdot A)^{-1} \cdot A^H \cdot \underline{s}^T.$$

Diese Lösung kann iterativ durch eine wiederholte Anwendung der folgenden Abbildung angenähert werden:

$$\hat{\underline{d}} \mapsto \hat{\underline{d}} + \delta \cdot g$$

mit

$$\delta = \frac{\|g\|^2}{\|A \cdot g\|^2}$$

und

$$\underline{g}^T = A^H \cdot (\underline{s}^T - A \cdot \hat{\underline{d}}^T)$$

Das Verfahren umfaßt daher die folgenden Schritte:

i) Setze $\hat{\underline{d}}$ auf den ersten Schätzwert $\hat{\underline{d}}$ (1) für $\underline{d}$.
ii) Setze $\underline{d}$ auf den verbesserten ((n+1)-ten) Schätzwert $\hat{\underline{d}}+\delta \cdot g$ mit

$$\delta = \frac{\|g\|^2}{\|A \cdot g\|^2} \text{ und } \underline{g}^T = A^H \cdot (\underline{s}^T - A \cdot \hat{\underline{d}}^T).$$

iii) Wenn keine Rechenzeit mehr zur Verfügung steht, wird $\hat{\underline{d}}$ als Schätzwert für die gesendeten Daten $\underline{d}$ genommen, ansonsten wird die Iteration mit dem Schritt ii) fortgesetzt.

Wenn man als Startwerte für die zu detektierenden Daten $\hat{\underline{d}}_i^{(k)} = 0$ annimmt, so liefert das Verfahren im ersten Schritt die Lösung des RAKE-Empfängers.

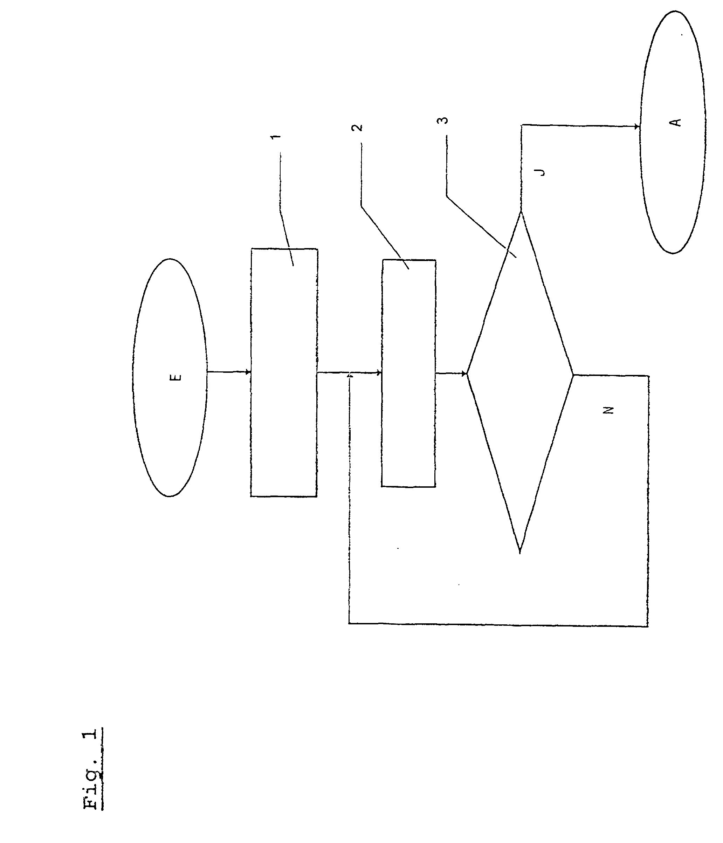

Das Verfahren ist in der Fig. 1 dargestellt. Als Eingabe E müssen das Gesamtsignal, die notwendigen Codes und die Kanalimpulsantworten zur Verfügung stehen. In einem ersten Schritt 1 wird die Detektionslösung $\underline{d}$ auf einen ersten Schätzwert $\underline{d}(1)$ der gesendeten Daten $\underline{d}$ gesetzt. In einem zweiten Schritt 2 wird die Detektionslösung $\underline{d}(2)$ auf einen verbesserten Schätzwert $\underline{d}(1)+\delta \cdot g$ mit den obigen Definitionen für $\delta$ und $g$ gesetzt. In dem folgenden Schritt 3 wird geprüft, ob keine weitere Rechenzeit zur Verfügung steht oder ob die Verbesserung ausreichend ist. Ist dies der Fall so wird die Iteration beendet und der verbesserte Schätzwert als Lösung genommen. Steht dagegen weitere Rechenzeit zur Verfügung oder ist die Verbesserung nicht ausreichend, so wird zum zweiten Schritt 2 zurückgekehrt, der verbesserte Schätzwert wird als Ausgangswert genommen und ein weiterer Iterationsschritt durchgeführt.

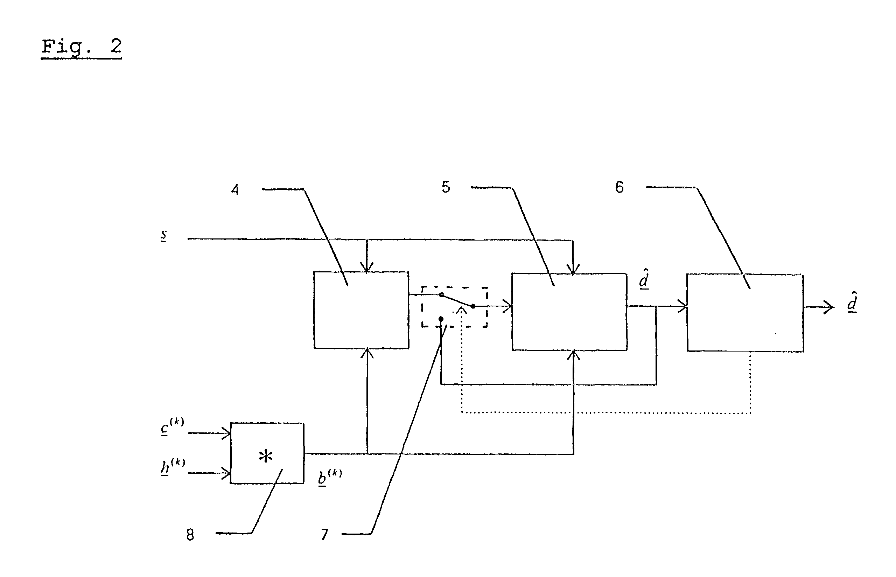

Fig. 2 zeigt die Struktur eines Detektors, der das oben beschriebene Verfahren durchführt. Eingangsgrößen sind das empfangene Signal s sowie die Codes $\underline{c}^{(k)}$ und die Impulsantworten $\underline{h}^{(k)}$. In einem Datenschätzer 4 wird eine erste Schätzung der Daten aus den genannten Eingangsgrößen vorgenommen. Diese erste Schätzung wird über einen Umschalter 7 in einen Schätzungsverbesserer 5 eingegeben. In dem Schätzungsverbesserer 5 wird die erste Schätzung des ersten Datenschätzers 4 unter Verwendung des oben beschriebenen Verfahrens verbessert. In einem Entscheider 6 wird bestimmt, ob einerseits keine Rechenzeit mehr zur Verfügung steht oder ob andererseits die Verbesserung der Schätzung ausreichend ist. In dem Fall, in dem noch Rechenzeit zur Verfügung steht und die Verbesserung nicht ausreichend ist, wird das Ergebnis der ersten Verbesserung wieder über den umgeschalteten Umschalter 7 als neuer Eingangswert auf den Eingang des Schätzungsverbesserers 5 gegeben. Die Iteration wird daher weitergeführt. Andernfalls wird der ermittelte Schätzwert als Wert der zu detektierenden Daten genommen. Ferner umfaßt der Detektor einen Faltungsberechner 8, der aus den Codes $\underline{c}^{(k)}$ und den Kanalimpulsantworten $\underline{h}^{(k)}$ die Größe $\underline{b}^{(k)}$ berechnet.

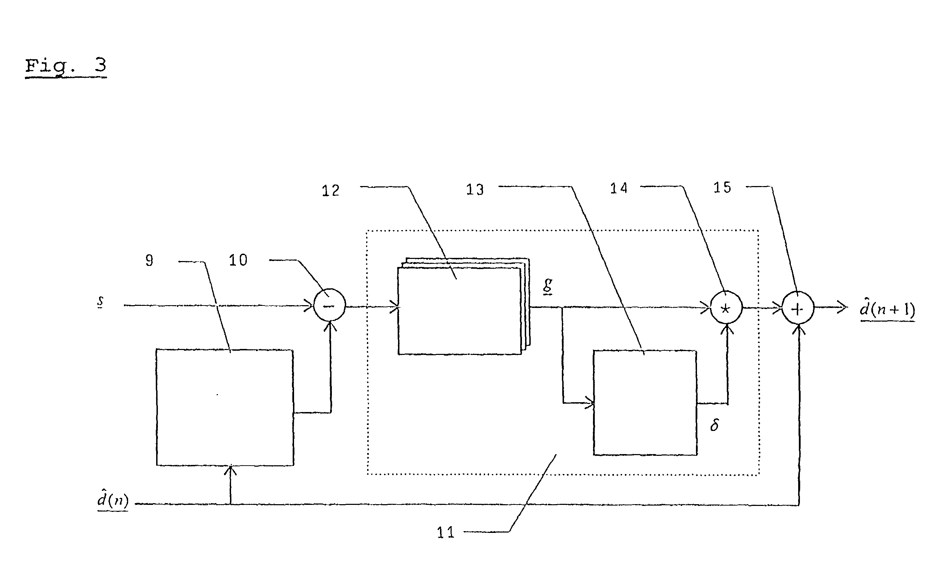

Fig. 3 zeigt ein Blockdiagramm einer bevorzugten Ausführungsform des Schätzungsverbesserers 5 der Fig. 2. In einer Einheit 9 zur Berechnung des geschätzten Sendesignals wird mit der n-ten Schätzung $\underline{d}(n)$ der Daten durch Berechnung von $A \cdot \underline{d}(n)$ die n-te Schätzung des Sendesignals berechnet und in einem Subtrahierer 10 von dem empfangenen Sendesignal $\underline{s}$ subtrahiert. Aus der Differenz wird in einer Einheit 11 der normalisierte Approximationsterm $\delta \cdot g$ berechnet. Diese Einheit 11 umfaßt eine Berechnungseinheit 12 zur Multiplikation der Differenz mit der transponierten Matrix $A^T$, wodurch der n-te Approximationsterm $g$ berechnet wird. Aus diesem Term wird ferner in einer Normalisierungseinheit 13 der Normalisierungfaktor $\delta$ über die oben angegebene Definitionsgleichung berechnet. In einem Multiplizierer 14 wird der normierte Approximationsterm $\delta \cdot g$ als Produkt des Normalisierungsfaktors $\delta$ und des Approximationsterms $g$ berechnet. In einem Addierer 15 wird dann der (n+1)-te Schätzwert $\underline{d}(n+1)$ durch Addition des n-ten Schätzwertes $\underline{d}(n)$ und des normierten (n)-ten Approximationsterms $\delta \cdot g$ gebildet.

**Patentansprüche**

1. Verfahren zur Detektion von CDMA-codierten Signalen $\underline{d}=(\underline{d}^{(1)},...,\underline{d}^{(K)})$, mit $\underline{d}^{(k)}=(d_1^{(k)},...,d_M^{(k)})$, $k = 1, ...,K$, **dadurch gekennzeichnet, daß** das Verfahren die folgenden Schritte aufweist:

   a) Bestimmen einer ersten Detektionslösung $\hat{\underline{d}}(1)$ der CDMA-codierten Signale $\underline{d}$;
   b) Bestimmen einer (n+1)-ten Detektionslösung $\underline{d}$(n+1) für n = 1,...,N als Funktion der n-ten Detektionslösung $\underline{d}$(n) durch die Zuweisung

$$\hat{\underline{d}}(n+1) = f(\hat{\underline{d}}(n)),$$

   wobei gilt, daß die Iteration für $n \to \infty$ gegen die Multiuser-Lösung $\hat{\underline{d}}_{MU}$ konvergiert, d.h.

$$f(\hat{\underline{d}}(n)) \xrightarrow[n \to \infty]{} \hat{\underline{d}}_{MU},$$

   c) Ist die Güte der Näherungslösung $\hat{\underline{d}}$(n+1) nicht ausreichend, Zuweisen n→n+1 und Fortsetzen des Verfahrens mit Schritt b),
   d) Ist die Güte der Lösung $\hat{\underline{d}}$(n+1) ausreichend, Beenden des Verfahrens und Verwenden von $\hat{\underline{d}}$(n+1) als Schätzwert der zu detektierenden Daten $\underline{d}$,

   **dadurch gekennzeichnet, daß** die Funktion des Schrittes b gegeben ist durch

$$f(\hat{\underline{d}}) = \hat{\underline{d}} + \delta \cdot \underline{g}$$

   mit

$$\delta = \frac{\|g\|^2}{\|A \cdot g\|^2} \text{ und } \underline{g}^T = A^H \cdot (\underline{s}^T - A \cdot \hat{\underline{d}}^T),$$

   wobei $\underline{s}$ ein Gesamtsignal aus übertragenen, Signalen $\underline{s}^{(k)}$ und zusätzlichen Rauschen $\underline{n}$ bezeichnet und die Matrix A gegeben ist durch

$$A = \begin{bmatrix} b^{(1)}_1 & 0 & \cdots & \\ \vdots & \vdots & & \\ b^{(1)}_{\varrho} & 0 & & \vdots \\ \vdots & b^{(1)}_1 & & \\ b^{(1)}_{\varrho+W-1} & \vdots & & 0 \\ 0 & b^{(1)}_{\varrho+W-1} & & b^{(K)}_1 \\ \vdots & \vdots & & \vdots \\ 0 & 0 & \cdots & b^{(k)}_{\varrho+W-1} \end{bmatrix}$$

   mit $\underline{b}^{(k)} = \underline{c}^{(k)} * \underline{h}^{(k)}$,
   wobei $\underline{c}^{(k)}$ die K verschiedenen Codes und $\underline{h}^{(k)}$ die Impulsantworten der K verschiedenen linearen Übertragungskanäle sind.

2. Verfahren nach Anspruch 1, **dadurch gekennzeichnet, dass** das Verfahren für $n \to \infty$ gegen die Lösung des Zero Forcing Block Linear Estimator konvergiert

**3.** Verfahren nach einem der vorangegangenen Ansprüche, **dadurch gekennzeichnet, dass** die zu sendenden Symbole $d^{(k)}$ die Werte $\pm 1$ oder $\pm i$ annehmen.

**4.** Verfahren nach einem der vorangegangenen Ansprüche, **dadurch gekennzeichnet, dass** als 1-te Detektionslösung zum Starten der Iteration die Lösung $\underline{d}^T(1) = A^H \cdot \underline{s}^T$ des RAKE-Empfängers verwendet wird.

**5.** Verfahren nach einem der Ansprüche 1 bis 3, **dadurch gekennzeichnet, dass** die erste Detektionslösung zum Starten der Iteration auf Null gesetzt wird.

**6.** Vorrichtung mit clütteln zur Durchführung der Verfahren schritte nach einem der Ansprüche 1 bis 5, **dadurch gekennzeichnet, dass** die Vorrichtung einen Datenschätzer (4) zur Bestimmung einer ersten Detektionslösung, einen Schätzungsverbesserer (5) zur Bestimmung einer verbesserten Detektionslösung und einen Entscheider (6) zur Entscheidung über die Fortsetzung der Iteration aufweist.

**7.** Vorrichtung nach Anspruch 6, **dadurch gekennzeichnet, dass** der Schätzungsverbesserer (5) eine Einheit (9) zur Berechnung eines geschätzten Sendesignals, eine Einheit (11) zur Berechnung des normalisierten Approximationsterms $\delta \cdot \underline{g}$ und einen Addierer (15) zur Berechnung der verbesserten Schätzung aufweist.

**8.** Vorrichtung nach Anspruch 7, **dadurch gekennzeichnet, dass** die Einheit (11) zur Berechnung des normalisierten Approximationsterms $\delta \cdot \underline{g}$ eine Einheit (12) zur Berechnung des Approximationsterms $\underline{g}$, eine Einheit (13) zur Berechnung des Normalisierungsfaktors $\delta$ und einen Multiplizierer (14) zur Berechnung des normalisierten Approximationsterms aufweist.

**Claims**

**1.** Method for detecting CDMA-coded signals $\underline{d}=(\underline{d}^{(1)},...,\underline{d}^{(K)})$, where $\underline{d}^{(k)}=(d_1^{(k)},...,d_M^{(k)})$, $k=1,...,K$, comprising the following steps:

a) determination of a first detection solution $\hat{\underline{d}}(1)$ of the CDMA-coded signals $\underline{d}$;
b) determination of an (n+1)th detection solution $\underline{d}(n+1)$ for n = 1,...,N as a function of the nth detection solution $\underline{d}(n)$ by means of the assignment

$$\hat{\underline{d}}(n+1) = f(\hat{\underline{d}}(n)),$$

where it holds that the iteration converges to the multiuser solution $\hat{\underline{d}}_{MU}$ for $n \to \infty$, that is to say

$$f(\hat{\underline{d}}(n)) \xrightarrow[n \to \infty]{} \hat{\underline{d}}_{MU},$$

c) in the event that the quality of the approximation solution $\hat{\underline{d}}(n+1)$ is not sufficient, the assignment $n \to n+1$ and continuation of the method using step b) and
d) in the event that the quality of the solution $\hat{\underline{d}}(n+1)$ is sufficient, termination of the method and use of $\hat{\underline{d}}(n+1)$ as estimated value of the data $\underline{d}$ to be detected,

**characterized in that**
the function of the step b is given by

$$f(\hat{\underline{d}}) = \hat{\underline{d}} + \delta \cdot \underline{g}$$

where

$$\delta = \frac{\|g\|^2}{\|A \cdot g\|^2} \text{ and } \underline{g}^T = A^H \cdot (\underline{s}^T - A \cdot \hat{\underline{d}}^T),$$

$\underline{s}$ denoting a total signal composed of transmitted signals $\underline{s}^{(k)}$ and additional noise $\underline{n}$, and the matrix A being given by

$$A = \begin{bmatrix} b^{(1)}{}_1 & 0 & \cdots & \\ \vdots & \vdots & & \\ b^{(1)}{}_Q & 0 & & \vdots \\ \vdots & b^{(1)}{}_1 & & \\ b^{(1)}{}_{Q+W-1} & \vdots & & 0 \\ 0 & b^{(1)}{}_{Q+W-1} & & b^{(K)}{}_1 \\ \vdots & \vdots & & \vdots \\ 0 & 0 & \cdots & b^{(k)}{}_{Q+W-1} \end{bmatrix}$$

where $\underline{b}^{(k)} = \underline{c}^{(k)} * \underline{h}^{(k)}$,
$\underline{c}^{(k)}$ being the K different codes and $\underline{h}^{(k)}$ being the pulse responses of the K different linear transmission channels.

2. Method according to Claim 1, **characterized in that** for n → ∞ the method converges to the solution of the zero forcing block linear estimator.

3. Method according to one of the preceding claims, **characterized in that** the symbols d$^{(k)}$ to be sent assume the values ± 1 or ± i.

4. Method according to one of the preceding claims, **characterized in that** the solution $\hat{\underline{d}}^T(1) = A^H \cdot \underline{s}^T$ of the RAKE receiver is used as 1st detection solution for starting the iteration.

5. Method according to one of Claims 1 to 3, **characterized in that** the first detection solution is equated to zero for starting iteration.

6. Device having means for carrying out the method steps according to one of Claims 1 to 5, **characterized in that** the device has a data estimator (4) for determining a first detection solution, an estimation improver (5) for determining an improved detection solution, and a decision circuit (6) for deciding on the continuation of iteration.

7. Device according to Claim 6, **characterized in that** the estimation improver (5) has a unit (9) for calculating an estimated transmit signal, a unit (11) for calculating the normalized approximation term $\delta \cdot \underline{g}$, and an adder (15) for calculating the improved estimate.

8. Device according to Claim 7, **characterized in that** the unit (11) for calculating the normalized approximation term $\delta \cdot \underline{g}$ has a unit (12) for calculating the approximation term $\underline{g}$, a unit (13) for calculating the normalization factor $\delta$, and a multiplier (14) for calculating the normalized approximation term.

**Revendications**

1. Procédé de détection de signaux codés AMRC

$$\underline{d} = (\underline{d}, ..., \underline{d}^{(k)}), \text{ avec } \underline{d}^{(k)} = (d_1{}^{(k)}, ..., d_M{}^{(k)}), \ k = 1, ..., K,$$

les étapes suivantes :

a) détermination d'une première solution de détection $\hat{\underline{d}}(1)$ des signaux codés AMRC $\underline{d}$ ;

b) détermination d'une (n+1)ième solution de détection $\hat{\underline{d}}(n+1)$ pour n = 1, ..., N comme fonction de la nième solution de détection $\underline{d}(1)$ par l'affectation

$$\hat{\underline{d}}(n+1)=f(\hat{\underline{d}}(n),)$$

où l'itération pour n -> ∞ converge vers la solution multi-utilisateur $\hat{\underline{d}}_{MU}$, c'est-à-dire

$$f(\hat{\underline{d}}(n)) \xrightarrow[n \longrightarrow \infty]{} \hat{\underline{d}}_{MU}$$

c) si la qualité de la solution d'approche $\hat{\underline{d}}(n+1)$ n'est pas suffisante, affectation de n->n+ 1 et poursuite du procédé par l'étape b),

d) si la qualité de la solution est suffisante, fin du procédé et utilisation de $\hat{\underline{d}}(n+1)$ comme valeur estimée des données à détecter $\underline{d}$,

**caractérisé en ce que**

la fonction de l'étape b est donnée par

$$f(\hat{\underline{d}})=\hat{\underline{d}}+\delta.\underline{g}$$

avec

$$\delta= \frac{\|\underline{g}\|^2}{\|A.\underline{g}\|^2} \, et \; \underline{g}T = A^H \bullet (\underline{s}^T - A\bullet \hat{\underline{d}}^T),$$

$\underline{s}$ désignant un signal total composé de signaux transmis $\underline{s}^{(k)}$ et d'un bruit supplémentaire $\underline{n}$, et la matrice A est donnée par

$$A=\begin{bmatrix} b^{(1)}1 & 0 & \cdots & \\ \vdots & \vdots & & \\ b^{(1)}Q & 0 & & \vdots \\ \vdots & b^{(1)}1 & & \\ b^{(1)}Q+W-1 & \vdots & & 0 \\ 0 & b^{(1)}Q+W-1 & & b^{(k)}1 \\ \vdots & \vdots & & \vdots \\ 0 & 0 & \cdots & b^{(1)}Q+W-1 \end{bmatrix}$$

avec $\underline{b}(k)=\underline{C}(k)*\underline{h}(\kappa)$

$\underline{c}^{(k)}$ étant les K codes différents et $\underline{h}^{(k)}$ les réponses d'impulsion des K différents canaux de transmission linéaires.

**2.** Procédé selon la revendication 1,
**caractérisé en ce que**
le procédé pour n -> ∞ converge vers la solution de l'estimation linéaire du « zéro forcing bloc ».

**3.** Procédé selon l'une quelconque des revendications précédentes,
**caractérisé en ce que**
les symboles à envoyer $d^{(k)}$ prennent les valeurs de $\pm$ 1 ou de $\pm$ i.

**4.** Procédé selon l'une quelconque des revendications précédentes,
**caractérisé en ce que**
comme 1ère solution de détection pour démarrer l'itération on utilise la solution $\hat{\underline{d}}^T(1)=A^H\cdot S^T$

du récepteur RAKE.

5. Procédé selon l'une quelconque des revendications 1 à 3,
**caractérisé en ce que**
la première solution de détection pour démarrer l'itération est mise à zéro.

6. Dispositif comprenant des moyens pour la mise en oeuvre des étapes de procédé selon l'une quelconque des revendications 1 à 5,
**caractérisé en ce que**
le dispositif présente un estimateur de données (4) pour déterminer une première solution de détection, un améliorateur d'estimation (5) pour déterminer une solution de détection améliorée et un décideur (6) pour décider de la poursuite de l'itération.

7. Dispositif selon la revendication 6,
**caractérisé en ce que**
l'améliorateur d'estimation (5) présente une unité (9) pour calculer un signal d'émission estimé, une unité (11) pour calculer le terme d'approximation normalisé $\delta \cdot g$ et un totalisateur (15) pour calculer l'estimation améliorée.

8. Dispositif selon la revendication 7,
**caractérisé en ce que**
l'unité (11) pour calculer le terme d'approximation normalisé $\delta \cdot g$ comprend une unité (12) pour calculer le terme d'approximation g, une unité (13) pour calculer le facteur de normalisation $\delta$ et un multiplicateur (14) pour calculer le terme d'approximation normalisé.

Fig. 1

EP 1 112 623 B1

Fig. 2

Fig. 3